# EUROPEAN PATENT APPLICATION

(11) **EP 4 654 289 A1**
(43) Date of publication of application: **26.11.2025**
(21) Application number: 23942193.6
(22) Date of filing: 22.12.2023
(51) Int. Cl.: H01M 4/36, H01M 4/48, C08F 220/02

(54) **NEGATIVE ELECTRODE ACTIVE MATERIAL AND PREPARATION METHOD THEREFOR, AND RELATED DEVICE**

(30) Priority: 20.06.2023 CN 202310732590
(71) Applicant: Contemporary Amperex Technology Co., Limited, Ningde, Fujian 352100 (CN)
(72) Inventor: AI, Qing, Ningde, Fujian 352100 (CN)
(74) Representative: Lorenz Seidler Gossel Part. mbB
(86) International application number: PCT/CN2023/140845
(87) International publication number: WO 2024/259928

(57) **Abstract**

A negative electrode active material and a preparation method therefore, and a related device. The negative electrode active material comprises a negative electrode active substance and a coating layer. The coating layer is coated on the surface of the negative electrode active substance, and the coating layer comprises at least one of polymethyl methacrylate, sodium maleate, and oleic acid diethanolamide borate. The cycle performance and the initial coulombic efficiency of batteries are improved.

## Description

### CROSS REFERENCE

The present application claims priority to Chinese Patent Application No. 202310732590.6, filed with the China National Intellectual Property Administration on June 20, 2023 and entitled "Negative Electrode Active Material and Preparation Method Therefore, and Related Device", the entire disclosure of which is incorporated herein by application.

### TECHNICAL FIELD

The present application relates to the technical field of batteries, and more specifically, to a negative electrode active material and a preparation method therefor, a negative electrode plate, a battery cell, a battery, and an electric device.

### BACKGROUND

In recent years, lithium ion batteries are used in wider fields, for example, the energy storage power field such as wind power, hydropower, thermal power generation, and solar power plant, and a plurality of fields such as an electric bicycle, an electric motorcycle, an electric vehicle, military equipment, and aerospace. While the lithium ion batteries are greatly developed, higher requirements are put forward for various aspects of the performance of the lithium ion batteries.

Therefore, how to improve the performance of the lithium ion batteries is a problem to be resolved urgently.

### SUMMARY

The present application is carried out in view of the above topic and aims to provide a positive electrode active material and a preparation method therefor, a negative electrode plate, a battery cell, a battery, and an electric device, so the cycle performance and the first cycle coulombic efficiency of the battery are improved.

A first aspect of the present application provides a negative electrode active material, including a negative electrode active substance and a coating layer. The coating layer is coated on a surface of the negative electrode active substance, and the coating layer includes at least one of polymethyl methacrylate, sodium maleate, and oleic acid diethanolamide borate.

In the embodiment of the present application, the negative electrode active material includes a negative electrode active substance and a coating layer, the coating layer is coated on a surface of the negative electrode active substance, and the coating layer includes at least one of polymethyl methacrylate, sodium maleate, and oleic diethanolamide borate. By coating a coating layer on the surface of the negative electrode active substance, the coating layer includes at least one of polymethyl methacrylate, sodium maleate, and oleic diethanolamide borate, and such a coating layer has a flexible property, which may not only reduce the damage of the material structure of the coating layer caused by multiple conduction of lithium ions, but also inhibit the interfacial reaction between an electrolyte and the surface of the negative electrode plate, reduce the consumption of irreversible active ions and improve the deintercalation efficiency of the lithium ions, thereby improving the first cycle coulombic efficiency and the cycle performance of the battery.

In a possible implementation, a thickness of the coating layer is 5 nm to 50 nm, and optionally, the thickness of the coating layer is 10 nm to 20 nm.

In the embodiment of the present application, if the thickness of the coating layer is too less, the coating layer does not sufficiently coat the negative electrode active substance, and the effect of inhibiting the interfacial reaction of the negative electrode is insignificant; and if the thickness of the coating layer is too great, the transmission rate of the lithium ions will be affected. Therefore, the thickness of the coating layer is 5 nm to 50 nm, and particularly 10 nm to 20 nm, which is beneficial to further improving the cycle performance and the first cycle coulombic efficiency of the battery.

In a possible implementation, a molecular weight of the polymethyl methacrylate is 500,000 to 2,000,000, and optionally, the molecular weight of the polymethyl methacrylate is 1,000,000 to 1,500,000.

In the embodiment of the present application, by polymerizing methyl methacrylate and the negative electrode active substance to form the negative electrode active material including the negative electrode active substance and the coating layer, the preparation method is simple and the raw materials are abundant, which is beneficial to wide application in industrial production, and in addition, the molecular weight of polymethyl methacrylate is 500,000 to 2,000,000, particularly 1,000,000 to 1,500,000, and polymethyl methacrylate with a higher degree of polymerization is used as the coating layer of the negative electrode active substance, which is beneficial for the coating layer to fully exert its function.

In a possible implementation, the negative electrode active substance includes at least one of graphite and a silicon-based material, and optionally, the silicon-based material includes at least one of monatomic silicon, a silicon-oxygen compound, a silicon-carbon compound, a silicon-nitrogen compound, and a composite of the monatomic silicon, the silicon-oxygen compound, and a silicon-carbon compound; and optionally, the silicon-oxygen compound includes SiₐO_{b}, where a=1, 1≤b≤2, and optionally, the silicon-carbon compound includes Si_{c}C_{d}, where c=1, d=1.

In the embodiment of the present application, at least one of graphite and silicon-based material is used as the negative electrode active material, and further, at least one of the monatomic silicon, the silicon-oxygen compound, the silicon-carbon compound, the silicon-nitrogen compound, and the composite of the monatomic silicon, the silicon-oxygen compound, and the silicon-carbon compound is used, and further, at least one of SiₐO_{b} and Si_{c}C_{d} is used, where a=1, 1≤b≤2, c=1, and d=1, which is beneficial to improving the energy density of the battery.

A second aspect of the present application provides a preparation method for a negative electrode active material, including: providing a negative electrode active substance and a coating substance, and mixing the negative electrode active substance and the coating substance and performing a treatment to obtain the negative electrode active substance and the coating layer coated on the surface of the negative electrode active substance, where the coating substance includes at least one of methyl methacrylate, sodium maleate, and oleic acid diethanolamide borate.

In the embodiment of the present application, after the negative electrode active substance and the coating substance are mixed and treated, the negative electrode active material including the negative electrode active substance and the coating layer coated on the surface of the negative electrode active substance may be obtained, where the coating material includes at least one of methyl methacrylate, sodium maleate, and oleic diethanolamide borate. The negative electrode active material prepared by the preparation method may enable a battery including the negative electrode active material to have better cycle performance and first cycle coulombic efficiency.

In a possible implementation, a thickness of the coating layer is 5 nm to 50 nm, and optionally, the thickness of the coating layer is 10 nm to 20 nm.

In the embodiment of the present application, the thickness of the coating layer is 5 nm to 50 nm, and particularly 10 nm to 20 nm, which is beneficial to further improving the cycle performance and the first cycle coulombic efficiency of the battery.

In a possible implementation, the methyl methacrylate is polymerized to form the coating layer, and the coating layer includes polymethyl methacrylate, where a molecular weight of the polymethyl methacrylate is 500,000 to 2,000,000, and optionally, the molecular weight of the polymethyl methacrylate is 1,000,000 to 2,000,000.

In the embodiment of the present application, the coating layer is formed by polymerizing methyl methacrylate, and the negative electrode active material including the negative electrode active substance and the coating layer is formed. The preparation method is simple and the raw materials are abundant, which is beneficial to wide application in industrial production, and in addition, the molecular weight of polymethyl methacrylate is 500,000 to 2,000,000, and polymethyl methacrylate with a higher degree of polymerization is used as the coating layer of the negative electrode active substance, which is beneficial for the coating layer to fully exert its role.

In a possible implementation, the mass ratio of the methyl methacrylate to the negative electrode active material is 1 to 5, and optionally, the mass ratio of the methyl methacrylate to the negative electrode active material is 1.5 to 3.

In the embodiment of the present application, the difference in the mass ratio of the negative electrode active substance to methyl methacrylate will directly affect the thickness of the coating layer. Therefore, by setting the mass ratio of the methyl methacrylate to the negative electrode active substance to be 1 to 5, particularly 1.5 to 3, the coating layer may have a reasonable thickness, thereby exerting the effect of the coating layer.

In a possible implementation, the treatment temperature of the negative electrode active substance and the methyl methacrylate is not lower than 60°C, and optionally, the treatment temperature is 60°C to 220°C.

In the embodiment of the present application, methyl methacrylate is polymerized to form polymethyl methacrylate, and the polymethyl methacrylate is used as a coating layer to coat the negative electrode active substance. If the treatment temperature is too low, the polymethyl methacrylate may fail to polymerize, and if the treatment temperature is too high, the relative molecular mass of the polymethyl methacrylate will be affected, resulting in a decrease in the performance of the polymethyl methacrylate. Therefore, by keeping the treatment temperature of the negative electrode active substance and the methyl methacrylate at a temperature not less than 60°C, particularly 60°C to 220°C, the polymethyl methacrylate thus polymerized has better properties, which is beneficial to further improving the performance of the battery.

In a possible implementation, the treatment time of the negative electrode active substance and the methyl methacrylate is 1h-8h, and optionally, the treatment time is 3h-5h.

In the embodiment of the present application, by keeping the treatment time of the negative electrode active substance and the methyl methacrylate at 1h-8h, particularly at 3h-5h, the polymethyl methacrylate may have a reasonable thickness, thereby improving the performance of the battery.

In a possible implementation, the catalyst, the negative electrode active substance, and the methyl methacrylate are mixed, and optionally, the catalyst includes at least one of an organic peroxide and an azo compound.

In the embodiment of the present application, the catalyst is added in a reaction between the methyl methacrylate and the negative electrode active substance, and the catalyst may reduce the activation energy of the polymerization reaction and accelerate the progress of the polymerization reaction. Therefore, by adding the catalyst in the polymerization process of polymethyl methacrylate, and the catalyst may be at least one of the organic peroxide and the azo compound, so that the production of polymethyl methacrylate may be accelerated.

In a possible implementation, the coating substance includes at least one of sodium maleate and oleic acid diethanolamide borate, and the treatment temperature of the negative electrode active substance and at least one of sodium maleate and oleic acid diethanolamide borate is not lower than 40°C, and optionally, the treatment temperature is 40°C to 120°C.

In the embodiment of the present application, the negative electrode active material including the negative electrode active substance and the coating layer may be obtained by mixing the negative electrode active substance with sodium maleate or oleic acid diethanolamide borate, and the treatment temperature of the two is kept at a temperature not lower than 40°C, particularly 40°C to 120°C, so that the activity of the coating layer may not be damaged, thereby improving the performance of the battery.

In a possible implementation, the mass ratio of at least one of sodium maleate and oleic acid diethanolamide borate to the negative electrode active substance is 1 to 3, and optionally, the mass ratio of at least one of sodium maleate and oleic acid diethanolamide borate to the negative electrode active substance is 1 to 2.

In the embodiment of the present application, when at least one of sodium maleate and oleic acid diethanolamide borate is used as the coating layer to coat the negative electrode active substance, it is only necessary to directly mix the two at a certain temperature. By setting the mass ratio of at least one of sodium maleate and oleic acid diethanolamide borate to the negative electrode active substance to be 1 to 3, particularly 1 to 2, the coating layer may have a suitable thickness to improve the performance of the battery.

In a possible implementation, the negative electrode active substance includes at least one of graphite and a silicon-based material, and optionally, the silicon-based material includes at least one of monatomic silicon, a silicon-oxygen compound, a silicon-carbon compound, a silicon-nitrogen compound, and a composite of the monatomic silicon, the silicon-oxygen compound, and a silicon-carbon compound; and optionally, the silicon-oxygen compound includes SiₐO_{b}, where a=1, 1≤b≤2, and optionally, the silicon-carbon compound includes Si_{c}C_{d}, where c=1, d=1.

A third aspect of the present application provides a negative electrode plate, including the negative electrode active material according to any one of the embodiments in the first aspect, and/or including the negative electrode active material prepared by the preparation method for a negative electrode active material according to any one of the embodiments in the second aspect.

A fourth aspect of the present application provides a battery cell, including the negative electrode plate in the third aspect.

A fifth aspect of the present application provides a battery, including the battery cell in the fourth aspect.

A sixth aspect of the present application provides an electric device, including the battery in the fifth aspect.

### DESCRIPTION OF DRAWINGS

In order to more clearly illustrate the technical solutions of the embodiments of the present application, the drawings required to be used in the embodiments of the present application will be briefly introduced below. Apparently, the drawings described below are only some embodiments of the present application. For persons of ordinary skill in the art, other drawings can also be obtained from the drawings without creative work.
FIG. 1 is a schematic structural diagram of a negative electrode active material according to an implementation of the present application;
FIG. 2 is a TEM diagram of a negative electrode active material according to an implementation of the present application;
FIG. 3 is a preparation flowchart of a negative electrode active material according to an implementation of the present application;
FIG. 4 is a schematic diagram of a battery cell according to an implementation of the present application;
FIG. 5 is a schematic structural diagram of a battery cell according to another implementation of the present application;
FIG. 6 is a schematic diagram of a battery according to an implementation of the present application;
FIG. 7 is a schematic structural diagram of a battery according to an implementation of the present application; and
FIG. 8 is a schematic structural diagram of an electric device according to an implementation of the present application.

### DESCRIPTION OF EMBODIMENTS

The implementations of a negative electrode active material and a preparation method therefor, a negative electrode plate, a battery cell, a battery, and an electric device according to the present application are described below in detail with appropriate reference to the accompanying drawings. However, unnecessary detailed descriptions are omitted. For example, a detailed description of well-known matters and repeated descriptions of a substantially same structure may be omitted. The accompanying drawings and the following descriptions are provided for those skilled in the art to fully understand this application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all examples and optional examples of the present application may be combined with each other to form new technical solutions.

Unless otherwise specified, all technical features and optional technical features of this application may be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the method may further include step (c), which indicates that step (c) may be added to the method in any order. For example, the method may include steps (a), (b), and (c), may include steps (a), (c), and (b), may include steps (c), (a) and (b), or the like.

A term "above", "below", "greater than", or "less than" used in the present application includes an endpoint value. For example, "at least one" means one or a plurality, and "at least one of A and B" means "A", "B" or "A and B".

The cycle life of the lithium battery is related to the stability of the interface (such as the interface between the electrode plate and the electrolyte), and the formation of the interface is often accompanied by the irreversible consumption of lithium ions, especially for the interface between the negative electrode plate and the electrolyte. This is because the formed solid electrolyte interface (SEI) film will consume a large amount of lithium ions when the battery is first charged and discharged, and this part of consumed lithium ions is irreversible. If too many lithium ions are consumed, the performance of the battery will be greatly affected. Therefore, how to reduce the irreversible consumption of limited lithium ions is the key to limit the cycle stability and coulombic efficiency of the lithium battery.

In order to solve the above problems, on the one hand, active lithium may be supplemented, for example, a lithium supplement material is added to the battery or a lithium supplement structure is constructed, but the lithium supplement material generally has high activity, and has high requirements on the processing conditions of the battery, and the possibility of industrialization is not high. On the other hand, the consumption of active lithium may be reduced, for example, a polymeric aluminum foil film layer is disposed on the surface of the negative electrode active material, but this method is complicated in process and has a low possibility of industrialization. Therefore, how to reduce the consumption of active lithium ions in a more direct manner, so as to improve the cycling performance of the battery, is a problem that needs to be solved urgently.

In view of this, the present application provides a negative electrode active material and a preparation method thereof. The negative electrode active material includes a negative electrode active substance and a coating layer, where the coating layer is coated on a surface of the negative electrode active substance, and the coating layer includes at least one of polymethyl methacrylate, sodium maleate, and oleic acid diethanolamide borate. By directly coating at least one of polymethyl methacrylate, sodium maleate, and oleic diethanolamide borate on the surface of a substrate, the cycle performance and the first cycle coulombic efficiency of the battery using the negative electrode active material may be improved.

A negative electrode active material and a preparation method therefor, a negative electrode plate, a battery cell, a battery, and an electric device according to the present application are described below with reference to the accompanying drawings.

In addition, the technical solutions of the present application are applicable to lithium-ion batteries or lithium metal batteries. This is not limited in the present application. For ease of description, the lithium-ion battery is used as an example for description.

### [Negative electrode active material]

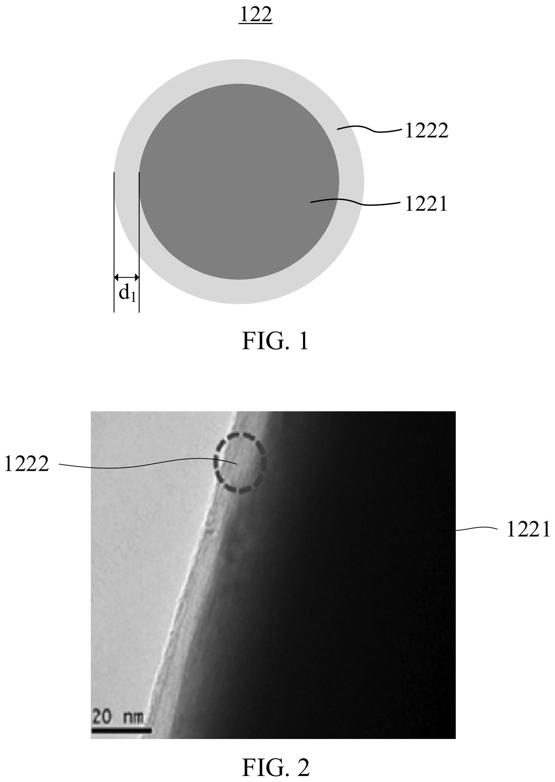

FIG. 1 is a schematic structural diagram of a negative electrode active material according to an implementation of the present application; and FIG. 2 is a TEM diagram of a negative electrode active material according to an implementation of the present application. As shown in FIG. 1 and FIG. 2, the negative electrode active material 122 includes a negative electrode active substance 1221 and a coating layer 1222, where the coating layer 1222 is coated on a surface of the negative electrode active substance 1221, and the coating layer 1222 includes at least one of polymethyl methacrylate, sodium maleate, and oleic diethanolamide borate.

The cycle performance and the first cycle coulombic efficiency of the battery may be improved by coating at least one of polymethyl methacrylate, sodium maleate, and oleic acid diethanolamide borate on the surface of the negative electrode active substance.

The coating here may be full coating as shown in FIG. 1 or partial coating as shown in FIG. 2.

In the embodiment of the present application, the negative electrode active material includes a negative electrode active substance 1221 and a coating layer 1222, and further, the coating layer 1222 is coated on the surface of the negative electrode active substance 1221, and the coating layer 1222 includes at least one of polymethyl methacrylate, sodium maleate, and oleic diethanolamide borate. By coating a coating layer 1222 on the surface of the negative electrode active substance 1221, the coating layer 1222 includes at least one of polymethyl methacrylate, sodium maleate, and oleic diethanolamide borate, and such a coating layer 1222 has a flexible property, which may not only reduce the damage of the material structure of the coating layer 1222 caused by multiple conduction of lithium ions, but also inhibit the interfacial reaction between an electrolyte and the surface of the negative electrode plate 122, reduce the consumption of irreversible active ions and improve the deintercalation efficiency of the lithium ions, thereby improving the first cycle coulombic efficiency and the cycle performance of the battery.

It should be noted herein that in the battery cycle process, the solid electrolyte interface (SEI) film will be formed on the surface of the negative electrode plate 122. The coating layer 1222 is relatively close to the SEI film, so the coating layer 1222 may serve as an "artificial" SEI film, and forms a double SEI film with the SEI film formed by the battery, so that a more stable and thin SEI film may be induced.

The SEI film means that in the first charge and discharge process of the battery, an active material is reacted with an electrolyte on a solid-liquid phase interface to form a passivation layer covering the surface of the active material. The coating layer 1222, as the "artificial" SEI film, means that it may function as the SEI film, and is not a real SEI film.

In addition, it should be understood that the "lithium intercalation" and "intercalation" processes described in the present application refer to the process in which lithium ions are intercalated into the positive electrode active material or the negative electrode active material due to an electrochemical reaction. The "deintercalation" and "extrication" processes described in the present application refer to the process in which lithium ions are deintercalated from the positive electrode active material or the negative electrode active material due to an electrochemical reaction.

In some implementations, the thickness d₁ of the coating layer 1222 is 5 nm to 50 nm, and optionally, the thickness d₁ of the coating layer is 10 nm to 20 nm.

In the above solution, if the thickness of the coating layer 1222 is too less, the coating layer 1222 does not sufficiently coat the negative electrode active substance 1221, and the effect of inhibiting the interfacial reaction of the negative electrode is insignificant, and if the thickness of the coating layer 1222 is too great, the transmission rate of metal ions will be affected. Therefore, the thickness of the coating layer 1222 is 5 nm to 50 nm, and particularly 10 nm to 20 nm, which is beneficial to further improving the cycle performance and the first cycle coulombic efficiency of the battery.

It should be noted herein that the thickness of the coating layer may be 5 nm, 15 nm, 20 nm, 40 nm, or any numerical value in the above range.

In some implementations, a molecular weight of the polymethyl methacrylate is 500,000 to 2,000,000, and optionally, the molecular weight of the polymethyl methacrylate is 1,000,000 to 15,000,000.

In the embodiment of the present application, by polymerizing methyl methacrylate and the negative electrode active substance 1221 to form the negative electrode active material 122 including the negative electrode active substance 1221 and the coating layer 1222, the preparation method is simple and the raw materials are abundant, which is beneficial to wide application in industrial production, and in addition, the molecular weight of polymethyl methacrylate is 500,000 to 2,000,000, particularly 1,000,000 to 1,500,000, and polymethyl methacrylate with a higher degree of polymerization is used as the coating layer 1222 of the negative electrode active substance 1221, which is beneficial for the coating layer 1222 to fully exert its function.

It should be noted herein that the molecular weight of the polymethyl methacrylate may be 500,000, 800,000, 1,000,000, 1,500,000, or any numerical value in the above range.

In addition, the molecular weight of the polymethyl methacrylate will vary depending on the thickness thereof.

In some implementations, the negative electrode active substance 1221 includes at least one of graphite and a silicon-based material, and optionally, the silicon-based material includes at least one of monatomic silicon, a silicon-oxygen compound, a silicon-carbon compound, a silicon-nitrogen compound, and a composite of the monatomic silicon, the silicon-oxygen compound, and a silicon-carbon compound; and optionally, the silicon-oxygen compound includes SiₐO_{b}, where a=1, 1≤b≤2, and optionally, the silicon-carbon compound includes Si_{c}C_{d}, where c=1, d=1.

In the above solution, at least one of graphite and silicon-based material is used as the negative electrode active material, and further, at least one of the monatomic silicon, the silicon-oxygen compound, the silicon-carbon compound, the silicon-nitrogen compound, and the composite of the monatomic silicon, the silicon-oxygen compound, and the silicon-carbon compound is used, and further, at least one of SiₐO_{b} and Si_{c}C_{d} is used, where a=1, 1≤b≤2, c=1, and d=1, which is beneficial to improving the energy density of the battery.

The composite of the monatomic silicon, the silicon-oxygen compound, and the silicon-carbon compound may include a composite formed by two of the three, for example, may be a multilayer composite structure formed by Si, SiO₂, and C, that is, Si@SiO₂@C.

### [Preparation method for negative electrode active material]

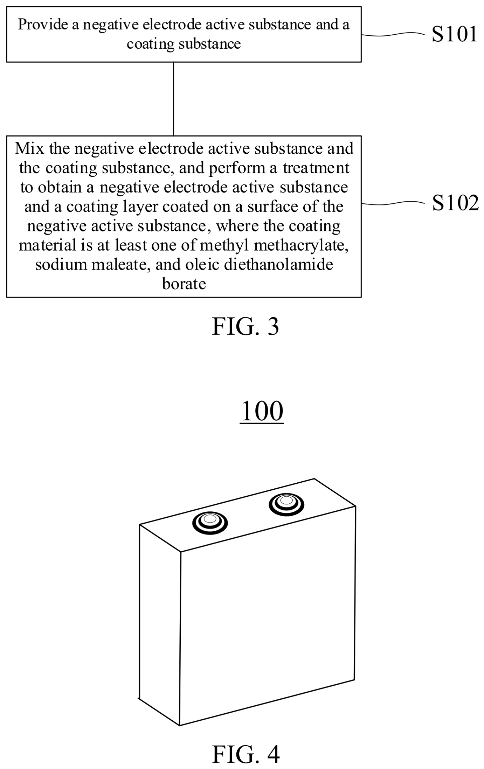

A second aspect of the present application provides a preparation method for a negative electrode active material. FIG. 3 is a preparation flowchart of a negative electrode active material according to an implementation of the present application. As shown in FIG. 3, the preparation method for a negative electrode active material includes:
S101, a negative electrode active substance and a coating substance are provided.

S102, the negative electrode active substance and the coating substance are mixed and treated to obtain a negative electrode active material and a coating layer coated on a surface of the negative electrode active substance, where the coating substance includes at least one of methyl methacrylate, sodium maleate, and oleic diethanolamide borate.

The coating substance is in a state of a substance before the coating layer is treated. When the coating substance is methyl methacrylate, the finally formed coating layer is polymethyl methacrylate, and when the coating substance is sodium maleate and oleic acid diethanolamide borate, the coating layer is sodium maleate and oleic acid diethanolamide borate. Therefore, sodium maleate and oleic acid diethanolamide borate hereinafter may be referred to as a coating substance or a coating layer, but methyl methacrylate may not be referred to as a coating layer, and polymethyl methacrylate may not be referred to as a coating material.

In the above solution, after the negative electrode active substance 1221 and the coating substance are mixed and treated, the negative electrode active material 122 including the negative electrode active substance 1221 and the coating layer 1222 coated on the surface of the negative electrode active substance 1221 may be obtained, where the coating material includes at least one of methyl methacrylate, sodium maleate, and oleic diethanolamide borate. The negative electrode active material 122 prepared by the preparation method may enable a battery including the negative electrode active material 122 to have better cycle performance and first cycle coulombic efficiency.

In some implementations, the thickness of the coating layer 1222 is 5 nm to 50 nm, and optionally, the thickness of the coating layer 1222 is 10 nm to 20 nm.

In the above solution, the thickness of the coating layer 1222 is 5 nm to 50 nm, particularly 10 nm to 20 nm, which is beneficial to further improving the cycle performance and the first cycle coulombic efficiency of the battery.

In some implementations, the methyl methacrylate is polymerized to form the coating layer 1222, and the coating layer 1222 includes polymethyl methacrylate, where the molecular weight of the polymethyl methacrylate is 500,000 to 2,000,000, and optionally, the molecular weight of the polymethyl methacrylate is 1,000,000 to 1,500,000.

Polymerization herein refers to a polymerization reaction, i.e. a process of converting a monomer with a low molecular weight into a polymer with a high molecular weight.

In addition, before the process of polymerizing the methyl methacrylate to form polymethyl methacrylate, the methyl methacrylate may be directly mixed with the negative electrode active substance 1221, so that the negative electrode active material 122 having the coating layer 1222 may be directly formed.

In the above solution, the coating layer 1222 is formed by polymerizing methyl methacrylate, and the negative electrode active material 122 including the negative electrode active substance 1221 and the coating layer 1222 is formed. The preparation method is simple and the raw materials are abundant, which is beneficial to wide application in industrial production, and in addition, the molecular weight of polymethyl methacrylate is 500,000 to 2,000,000, and polymethyl methacrylate with a higher degree of polymerization is used as the coating layer 1222 of the negative electrode active substance 1221, which is beneficial for the coating layer 1222 to fully exert its role.

In some implementations, the mass ratio of the methyl methacrylate to the negative electrode active substance 1221 is 1 to 5, and optionally, the mass ratio of the methyl methacrylate to the negative electrode active substance 1221 is 1.5 to 3.

In the above solution, the difference in the mass ratio of the methyl methacrylate to the negative electrode active substance 1221 will directly affect the thickness of the coating layer 1222. Therefore, by setting the mass ratio of the methyl methacrylate to the negative electrode active substance 1221 to be 1 to 5, particularly 1.5 to 3, the coating layer 1222 may have a reasonable thickness, thereby exerting the effect of the coating layer 1222.

It should be noted herein that the mass ratio of the methyl methacrylate to the negative electrode active substance 1221 may be 1.5, 2.8, 4.2, 5, or any numerical value in the above range.

In some implementations, the treatment temperature of the negative electrode active substance 1221 and the methyl methacrylate is not lower than 60°C, and optionally, the treatment temperature is 60°C to 220°C.

In the above solution, methyl methacrylate is polymerized to form polymethyl methacrylate, and polymethyl methacrylate is used as the coating layer 1222 to coat the negative electrode active substance 1221. If the treatment temperature is too low, the polymethyl methacrylate may fail to polymerize, and if the treatment temperature is too high, the relative molecular mass of the polymethyl methacrylate will be affected, resulting in a decrease in the performance of the polymethyl methacrylate. Therefore, by keeping the treatment temperature of the negative electrode active substance 1221 and the methyl methacrylate at a temperature not less than 60°C, particularly 60°C to 220°C, the polymethyl methacrylate thus polymerized has better properties, which is beneficial to further improving the performance of the battery.

It should be noted herein that the treatment temperature may be 60°C, 100°C, 150°C, 170°C, or any numerical value in the above range.

In some implementations, the treatment time of the negative electrode active substance 1221 and the methyl methacrylate is 1h to 8h, and optionally, the treatment time is 3h to 5h.

In the above solution, by keeping the treatment time of the negative electrode active substance 1221 and the methyl methacrylate at 1h to 8h, particularly at 3h to 5h, better polymethyl methacrylate may be formed.

It should be noted herein that the treatment time may be 1.5h, 3h, 5h, 8h, or any numerical value in the above range.

In some implementations, the catalyst, the negative electrode active substance 1221, and the methyl methacrylate are mixed, and optionally, the catalyst includes at least one of an organic peroxide and an azo compound.

The catalyst generally refers to a substance that increases the reaction rate without changing the total standard Gibbs free energy of the reaction, and may also be expressed as a substance that may increase the chemical reaction rate without changing the chemical equilibrium in the chemical reaction, and its own mass and chemical properties are not changed before and after the chemical reaction.

The organic peroxide refers to an organic compound containing an -O-O-peroxy functional group formed by replacing a hydrogen atom in hydrogen peroxide with an organic group such as alkyl, acyl, or aryl, and includes, but is not limited to, peroxybenzoic acid, methyl ethyl ketone peroxide, and the like.

The azo compound refers to a compound generated by linking an azo group (-N=N-) to two hydrocarbyl, with a general formula R-N=N-R, for example, azobisisobutyronitrile and the like.

In the above solution, the catalyst is added in a reaction between the methyl methacrylate and the negative electrode active substance 1221, and the catalyst may reduce the activation energy of the polymerization reaction and accelerate the progress of the polymerization reaction. Therefore, by adding the catalyst in the polymerization process of polymethyl methacrylate, and the catalyst may be at least one of the organic peroxide and the azo compound, so that the production of polymethyl methacrylate may be accelerated.

In some implementations, the coating substance includes at least one of sodium maleate and oleic acid diethanolamide borate, and the treatment temperature of the negative electrode active substance 1221 and at least one of sodium maleate and oleic acid diethanolamide borate is not lower than 40°C, and optionally, the treatment temperature is 40°C to 120°C.

In the above solution, the negative electrode active material 122 including the negative electrode active substance 1221 and the coating layer 1222 may be obtained by mixing the negative electrode active substance 1221 with sodium maleate or oleic acid diethanolamide borate, and the treatment temperature of the two is kept at a temperature not lower than 40°C, particularly 40°C to 120°C, so that the activity of the coating layer 1222 may not be damaged, thereby improving the performance of the battery.

It should be noted herein that the treatment temperature may be 45°C, 60°C, 80°C, 100°C, or any numerical value in the above range.

In some implementations, the mass ratio of at least one of sodium maleate and oleic acid diethanolamide borate to the negative electrode active substance 1221 is 1 to 3, and optionally, the mass ratio of at least one of sodium maleate and oleic acid diethanolamide borate to the negative electrode active substance 1221 is 1 to 2.

In the above solution, when at least one of sodium maleate and oleic acid diethanolamide borate is used as the coating layer 1222 to coat the negative electrode active substance 1221, the two may be directly mixed at a certain temperature. By setting the mass ratio of at least one of sodium maleate and oleic acid diethanolamide borate to the negative electrode active substance 1221 to 1-3, particularly 1-2, the coating layer 1222 may have an appropriate thickness to improve the performance of the battery.

It should be noted herein that the mass ratio of at least one of sodium maleate and oleic acid diethanolamide borate to the negative electrode active substance 1221 may be 1.2, 1.5, 2, 3, or any numerical value in the above range.

In some implementations, the negative electrode active substance 1221 includes at least one of graphite and a silicon-based material, and optionally, the silicon-based material includes at least one of SiₐO_{b} and Si_{c}C_{d}, where a=1, 1≤b≤2, c=1, d=1, and optionally, the silicon-based material includes Si@SiO₂@C.

It should be noted herein that when graphite is used as the negative electrode active substance 1221, the graphite may be fresh graphite or waste graphite, that is, used graphite.

Usually, a battery cell includes a positive electrode plate, a separator, a negative electrode plate, and an electrolyte. In a charging and discharging process of the battery, active ions are intercalated and deintercalated back and forth between a positive electrode and a negative electrode. The electrolyte functions to conduct ions between the positive electrode and the negative electrode. The separator is disposed between the positive electrode and the negative electrode, to mainly prevent the positive electrode and the negative electrode from being short-circuited and allow the ions to pass.

It should be noted that the "positive electrode plate" and the "negative electrode plate" mentioned in this example of the present application are entireties of the positive electrode plate and the negative electrode plate including an active material, a current collector, or another additive.

[Negative electrode plate]

The negative electrode plate includes a negative electrode current collector and a negative electrode film layer disposed on at least one surface of the negative electrode current collector, the negative electrode film layer including a negative electrode active material 122.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (such as copper, a copper alloy, nickel, a nickel alloy, titanium, a titanium alloy, silver, or a silver alloy) on a polymer material substrate (such as a substrate of polypropylene (PP), polyethylene terephthalate (PET), polybutylene terephthalate (PBT), polystyrene (PS), or polyethylene (PE)), or may be a current collector with merged supporting capacity and functional elements, for example, carbon cloth, a carbon film, a carbonic matter, a porous current collector, an alloyed modified current collector, and a lithiophilic modified current collector.

In some implementations, the negative electrode plate may be a metal foil rolled or surface-coated with an inert layer metal powder coated on the current collector, or may be a functionally coated negative electrode, such as a carbon material coating (including single-arm and multi-arm conductive carbon tubes, superconducting carbon, acetylene black, carbon black, ketjen black, carbon dots, carbon nanotubes, graphene and carbon nanofibers, soft carbon and hard carbon, and the like), a lithiophilic/sodiophilic metal composite coating, and the like.

In some implementations, the negative electrode plate is an alkali metal negative electrode. The alkali metal negative electrode may be an alkali metal layer provided on the surface of the current collector in advance, or may be a negative electrode current collector, and during the charging and discharging process, an alkali metal layer will be generated on the surface of the negative electrode current collector. This is not limited in the present application.

In some implementations, the negative electrode active substance 1221 in the negative electrode active material 122 may also be a negative electrode active substance for a battery well-known in the art. For example, the negative electrode active substance 1221 may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that may be used as a negative electrode active material of a battery may also be used. These negative electrode active materials may be used alone or in combination of two or more thereof.

In some embodiments, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some implementations, the negative electrode plate may be prepared in the following manner: dispersing the above-mentioned components for preparing the negative electrode plate, for example, the negative electrode active material 122, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode plate.

### [Positive electrode plate]

The positive electrode plate includes a positive electrode current collector and a positive electrode film layer disposed on at least one surface of the positive electrode current collector, the positive electrode film layer including a positive electrode active material.

As an example, the positive electrode current collector has two surfaces opposed in its own thickness direction, and the positive electrode film layer is provided on either one or both of the two opposed surfaces of the positive electrode current collector.

In some implementations, the positive electrode current collector may use a metal foil or a composite current collector. For example, an aluminum foil may be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the positive electrode active material may be a positive electrode active material for a battery well-known in the art. As an example, the positive electrode active material may include at least one of olivine-structured lithium-containing phosphate, lithium-transition metal oxide, and their respective modifying compounds. However, the present application is not limited to these materials, and other conventional materials that may be used as a positive electrode active material of a battery may also be used. These positive electrode active materials may be used alone or in combination of two or more thereof. Examples of the lithium transition metal oxide may include, but are not limited to, at least one of lithium cobalt oxide (e.g., LiCoO₂), lithium nickel oxide (for example, LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (may also be referred to as NCM333), LiNi_{0.5}Co_{0.2}Mn_{0.3}O₂ (may also be referred to as NCM523), LiNi_{0.5}Co_{0.25}Mn_{0.25}O₂ (may also be referred to as NCM211), LiNi_{0.6}Co_{0.2}Mn_{0.2}O₂ (may also be referred to as NCM622), LiNi_{0.8}Co_{0.1}Mn_{0.1}O₂ (may also be referred to as NCM811)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

Deintercalation and consumption of Li occur during charging and discharging of the battery, and the molar content of Li varies when the battery is discharged to different states. In the enumeration of the positive electrode material in the present application, the molar content of Li is an initial state of the material, i.e., a state before adding. The positive electrode material is applied to a battery system, and the molar content of Li changes after charging and discharging cycles.

Similarly, in the enumeration of the positive electrode material in the present application, a molar content of O is only a theoretical state value, a molar content of oxygen changes due to release of oxygen from a lattice, and an actual molar content of O fluctuates.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode plate may be prepared in the following manner: dispersing the foregoing components such as the positive electrode active material, the conductive agent, the binder, and any other component for preparing the positive electrode plate in a solvent (for example, N-methylpyrrolidone) to form positive electrode slurry; and coating the positive electrode slurry on a positive electrode current collector, and performing procedures such as drying and cold pressing, to obtain the positive electrode plate.

### [Electrolyte]

The electrolyte functions to conduct ions between the positive electrode plate and the negative electrode plate. The type of the electrolyte is not specifically limited in the present application, and may be selected according to a requirement. For example, the electrolyte may be liquid, gelled or all solid.

In some embodiments, the electrolyte uses an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the battery cell may include an outer package. The outer package may be used to package the electrode assembly and the electrolyte.

In some embodiments, the outer package of the battery cell may be a hard casing, for example, a hard plastic casing, an aluminum casing, or a steel casing. The outer package of the battery cell may also be a pouch, such as a bag-type pouch. The material of the pouch may be plastic, and examples of the plastic include polypropylene, polybutylene terephthalate, and polybutylene succinate.

The shape of the battery cell is not particularly limited in the present application, and may be a cylindrical shape, a square shape, or any other shape. For example, FIG. 4 is a schematic diagram of a battery cell according to an implementation of the present application.

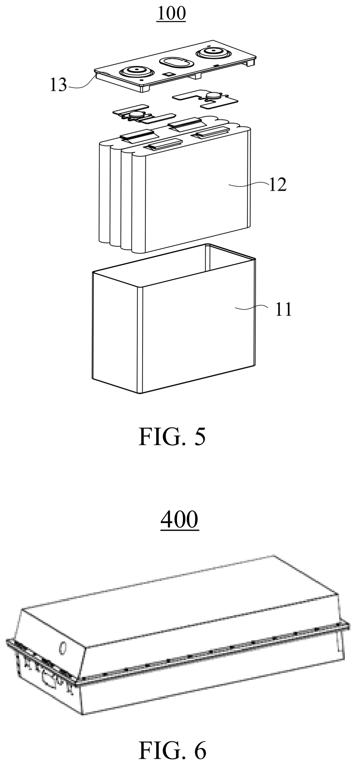

FIG. 5 is a schematic structural diagram of a battery cell according to another implementation of the present application. As shown in FIG. 5, an outer package of a battery cell 100 includes a housing 11 and a cover plate 13. The housing 11 may include a bottom plate and side plates connected to the bottom plate, and the bottom plate and the side plates may define an accommodating chamber. The housing 11 has an opening communicating with the accommodating chamber, and the cover plate 13 can cover the opening to close the accommodating chamber. The positive electrode plate, the negative electrode plate, and the separator may be formed into an electrode assembly 12 through a winding process or a lamination process. The electrode assembly 12 is packaged within the accommodating chamber. The electrolyte solution is impregnated into the electrode assembly 12. There may be one or a plurality of electrode assemblies 12 included in the battery cell 100, and those skilled in the art may perform selection according to specific actual requirements.

In some embodiments, the battery cell 100 may be assembled into a battery module, there may be one or a plurality of battery cells 100 included in the battery module, and those skilled in the art may select a specific quantity based on the application and capacity of the battery module.

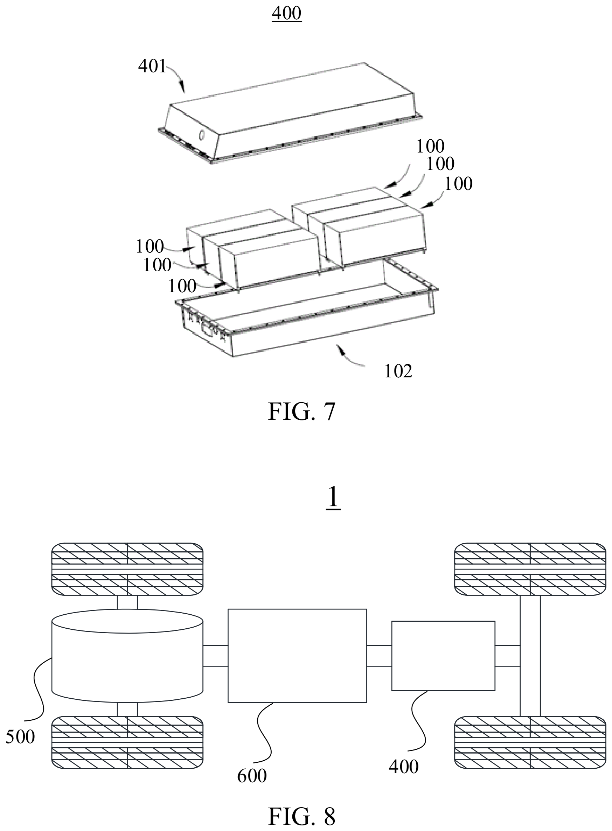

FIG. 6 is a schematic diagram of a battery according to an implementation of the present application. FIG. 7 is a schematic structural diagram of a battery according to an implementation of the present application. Referring to FIG. 6 and FIG. 7, a battery 400 may include a battery case and a plurality of battery cells 100 disposed in the battery case. The battery case includes an upper case 401 and a lower case 402, the upper case 401 can cover the lower case 402 and form closed space for accommodating the battery cell 100. The plurality of battery cells 100 may be arranged in the battery case in any manner.

In addition, the present application further provides an electric device. The electric device includes at least one of a battery cell 100 or a battery 400 provided by the present application. The battery cell 100 or the battery 400 may serve as a power source of the electric device, or may serve as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

For example, FIG. 8 is a schematic structural diagram of an electric device according to an implementation of the present application. As shown in FIG. 8, the electric device is a vehicle 1. The vehicle 1 may be a fuel vehicle, a gas vehicle, or a new energy vehicle, and the new energy vehicle may be a battery electric vehicle, a hybrid vehicle, or a range-extended electric vehicle. A motor 500, a controller 600, and a battery 400 may be disposed inside the vehicle 1. The controller 600 is configured to control the battery 400 to supply power to the motor 500. For example, the battery 400 may be disposed at the bottom or at the head or at the tail of the vehicle 1. The battery 400 may be configured to supply power to the vehicle 1, for example, the battery 400 may be used as an operating power source for the vehicle 1, used for a circuit system of the vehicle 1, for example, used for operating power requirements for starting, navigation, and running of the vehicle 1. In another implementation of the present application, the battery 400 may be used not only as the operating power source of the vehicle 1, but also as a driving power source of the vehicle 1, instead of or partially instead of fuel or natural gas to provide driving power to the vehicle 1.

As the electric device, the battery cell 100 or the battery 400 may be selected according to use requirements of the electric device.

The electric device is a pure electric vehicle, a hybrid electric vehicle, a plug-in hybrid electric vehicle, or the like. The battery cell 100 or the battery 400 may be used, to satisfy a requirement of the electric device for high power and high energy density of the battery.

In another example, the device may be a cell phone, a tablet computer, a notebook computer, or the like. The device usually needs to be light and thin, and the battery cell 100 may serve as a power source.

### [Examples]

Examples of the present application are described below. The examples described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### [Example 1]

### 1. Preparation of a lithium-ion battery

1.11) Preparation of a negative electrode active material: a coating substance methyl methacrylate (MMA) and a negative electrode active substance graphite were weighed at a mass ratio of 3:1 and dispersed in 45 mL of deionized water, and a catalyst benzoic peroxide was added for ultrasonic emulsification for 10 min to obtain a negative electrode active material mixture, and then the negative electrode active material mixture was poured into a three-neck flask and polymerized at 80°C for 4h under an argon (Ar) atmosphere to obtain the negative electrode active material, where the negative electrode active substance was artificial graphite, and the coating layer was polymethyl methacrylate (PMMA).

1.12) Preparation of a negative electrode plate: the negative electrode active material, a conductive agent acetylene black, a binder styrene butadiene rubber (SBR), and a thickener carbon sodium carboxymethyl cellulose (CMC) were fully stirred and mixed uniformly in an appropriate amount of a deionized water solvent system at a weight ratio of 97.5%: 0.7%: 1.8%: 1% to obtain a negative electrode active material, and the negative electrode active material was coated on a Cu foil and then dried, cold-pressed, and slit to obtain the negative electrode plate.

1.2) Preparation of a positive electrode plate: a positive electrode active material lithium iron phosphate LiFePO₄, a conductive agent carbon nanotube, and a binder named polyvinylidene fluoride (PVDF) in a solvent N-methylpyrrolidone (NMP) at a weight ratio 96%: 2%: 2%, the mixture was fully stirred and uniformly mixed to prepare a positive electrode active material, and the positive electrode active material was coated on an Al foil, and then dried, cold-pressed, and slit to obtain the positive electrode plate.

1.3) Preparation of a separator: using a PE porous polymer film as a separator.

1.4) Electrolyte solution: EC/EMC/DMC was dissolved in 1M LiPF₆ at a volume ratio 1: 1: 1, and the mixture was uniformly stirred.

1.5) Assembly: a positive electrode plate, a separator, and a negative electrode plate were stacked in sequence, so that the separator played a separation action between a positive electrode and a negative electrode; and winding was performed to obtain an electrode assembly, and an electrolyte solution was added. Subsequently, hot pressing was performed at 100°C and 250 MPa for 2 min to obtain a lithium-ion battery.

In the lithium ion battery of Example 1, the coating substance is methyl methacrylate, the coating layer is polymethyl methacrylate, the thickness of the coating layer is 20 nm, the mass ratio of the coating substance to the negative electrode active material is 3, the treatment time is 4h, the treatment temperature is 80°C, the molecular weight of the coating layer is 1,530,000, and the catalyst is peroxybenzoic acid.

### [Example 2]

The lithium ion battery of Example 2 is basically the same as the lithium ion battery of Example 1, except that in the lithium ion battery of Example 2, the mass ratio of the coating substance to the negative electrode active material is 1, and the thickness of the coating layer is 5 nm.

### [Example 3]

The lithium ion battery of Example 3 is basically the same as the lithium ion battery of Example 1, except that in the lithium ion battery of Example 3, the mass ratio of the coating substance to the negative electrode active material is 5, and the thickness of the coating layer is 50 nm.

### [Example 4]

The lithium ion battery of Example 4 is basically the same as the lithium ion battery of Example 1, except that in the lithium ion battery of Example 4, the mass ratio of the coating substance to the negative electrode active material is 1.5, and the thickness of the coating layer is 10 nm.

### [Example 5]

The lithium ion battery of Example 5 is basically the same as the lithium ion battery of Example 1, except that in the lithium ion battery of Example 5, the mass ratio of the coating substance to the negative electrode active material is 4, and the thickness of the coating layer is 30 nm.

### [Example 6]

The lithium ion battery of Example 6 is basically the same as the lithium ion battery of Example 1, except that in the lithium ion battery of Example 6, the treatment time is 1h, and the thickness of the coating layer is 2 nm.

### [Example 7]

The lithium ion battery of Example 7 is basically the same as the lithium ion battery of Example 1, except that in the lithium ion battery of Example 7, the treatment time is 8h, and the thickness of the coating layer is 60 nm.

### [Example 8]

The lithium ion battery of Example 8 is basically the same as the lithium ion battery of Example 1, except that in the lithium ion battery of Example 8, the treatment time is 3h, and the thickness of the coating layer is 12 nm.

### [Example 9]

The lithium ion battery of Example 9 is basically the same as the lithium ion battery of Example 1, except that in the lithium ion battery of Example 9, the treatment time is 5h, and the thickness of the coating layer is 45 nm.

### [Example 10]

The lithium ion battery of Example 10 is basically the same as the lithium ion battery of Example 1, except that in the lithium ion battery of Example 10, the treatment temperature is 60°C and the thickness of the coating layer is 11 nm.

### [Example 11]

The lithium ion battery of Example 11 is substantially the same as the lithium ion battery of Example 1, except that in the lithium ion battery of Example 11, the coating substance is sodium maleate, and sodium maleate is directly mixed with the negative electrode active material to obtain a negative electrode active material with a coating layer of sodium maleate, where the thickness of the coating layer is 28 nm, the mass ratio of the coating substance to the negative electrode active material is 4.5, and the treatment temperature is 60°C.

### [Example 12]

The lithium ion battery of Example 12 is basically the same as the lithium ion battery of Example 11, except that in the lithium ion battery of Example 12, the thickness of the coating layer is 13 nm and the mass ratio of the coating substance to the negative electrode active material is 2.5.

### [Example 13]

The lithium ion battery of Example 13 is basically the same as the lithium ion battery of Example 11, except that in the lithium ion battery of Example 13, the thickness of the coating layer is 10 nm and the mass ratio of the coating substance to the negative electrode active material is 2.

### [Example 14]

The lithium ion battery of Example 14 is basically the same as the lithium ion battery of Example 11, except that in the lithium ion battery of Example 14, the thickness of the coating layer is 5 nm and the mass ratio of the coating substance to the negative electrode active material is 1.

### [Example 15]

The lithium ion battery of Example 15 is substantially the same as the lithium ion battery of Example 1, except that in the lithium ion battery of Example 15, the coating substance is oleic acid diethanolamide borate, and the oleic acid diethanolamide borate is directly mixed with the negative electrode active material to obtain a negative electrode active material with a coating layer of oleic acid diethanolamide borate, where the thickness of the coating layer is 10 nm, the mass ratio of the coating substance to the negative electrode active material is 1, and the treatment temperature is 40°C.

### [Example 16]

The lithium ion battery of Example 16 is basically the same as the lithium ion battery of Example 1, except that in the lithium ion battery of Example 16, the catalyst is peroxyketal.

### [Example 17]

The lithium ion battery of Example 17 is basically the same as the lithium ion battery of Example 1, except that in the lithium ion battery of Example 17, the negative electrode active substance is SiO₂@Si@C.

### [Comparative Example 1]

The lithium ion battery of Comparative Example 1 is basically the same as the lithium ion battery in Example 1, except that in the lithium ion battery of Comparative Example 1, the negative electrode active material only includes a negative electrode active material, i.e., graphite.

### [Comparative Example 2]

The lithium ion battery of Comparative Example 2 is basically the same as the lithium ion battery in Example 1, except that in the lithium ion battery of Comparative Example 2, the negative electrode active material includes only a SiO₂-Si-C negative electrode active substance.

### [Comparative Example 3]

The lithium ion battery of Comparative Example 3 is basically the same as the lithium ion battery of Example 1, except that in the lithium ion battery of Comparative Example 3, the coating layer is aluminum oxide Al₂O₃).

### [Comparative Example 4]

The lithium ion battery of Comparative Example 4 is basically the same as the lithium ion battery in Example 1, except that in the lithium ion battery of Comparative Example 4, the coating layer is a 3 (3-nitrophenyl) acrylonitrile/olefin sulfonic acid copolymer.

### 2) Physical characterization of the negative electrode active material

2.1) Thickness measurement of the coating layer: the thickness was directly observed and measured by a scanning electron microscope (SEM) or a transmission electron microscope (TEM).

2.2) Molecular weight measurement: the molecular weight was directly measured by a light scattering detector.

**Table 1 Specific experiment parameters in Examples 1-17 and Comparative Examples 1-4**

| Group | Negative electrode active substance | Coating layer | Thickness of coating layer (nm) | Mass ratio of coating substance to negative electrode active substance | Treatment time (h) | Treatment temperature (°C) | Molecular weight of coating layer | Catalyst |
|---|---|---|---|---|---|---|---|---|
| Example 1 | Graphite | PMMA | 20 | 3 | 4 | 80 | 1450000 | Perbenzoic acid |
| Example 2 | Graphite | PMMA | 5 | 1 | 4 | 80 | 1000200 | Perbenzoic acid |
| Example 3 | Graphite | PMMA | 50 | 5 | 4 | 80 | 1900000 | Perbenzoic acid |
| Example 4 | Graphite | PMMA | 10 | 1.5 | 4 | 80 | 1300500 | Perbenzoic acid |
| Example 5 | Graphite | PMMA | 30 | 4 | 4 | 80 | 1860000 | Perbenzoic acid |
| Example 6 | Graphite | PMMA | 2 | 3 | 1 | 80 | 80000 | Perbenzoic acid |
| Example 7 | Graphite | PMMA | 60 | 3 | 8 | 80 | 2000000 | Perbenzoic acid |
| Example 8 | Graphite | PMMA | 12 | 3 | 3 | 80 | 1500800 | Perbenzoic acid |
| Example 9 | Graphite | PMMA | 45 | 3 | 5 | 80 | 1860000 | Perbenzoic acid |
| Example 10 | Graphite | PMMA | 11 | 3 | 4 | 60 | 1300000 | Perbenzoic acid |
| Example 11 | Graphite | Sodium maleate | 28 | 4.5 | / | 60 | / | / |
| Example 12 | Graphite | Sodium maleate | 13 | 2.5 | / | 60 | / | / |
| Example 13 | Graphite | Sodium maleate | 10 | 2 | / | 60 | / | / |
| Example 14 | Graphite | Sodium maleate | 5 | 1 | / | 60 | / | / |
| Example 15 | Graphite | Oleic acid diethanolamide borate | 10 | 1 | / | 40 | / | / |
| Example 16 | Graphite | PMMA | 20 | 3 | 4 | 80 | 1200000 | Peroxyketal |
| Example 17 | SiO₂@Si @C | PMMA | 20 | 3 | 4 | 8 | 1150000 | Perbenzoic acid |
| Comparative Example 1 | Graphite | / | / | / | / | / | / | / |
| Comparative Example 2 | SiO₂@Si @C | / | / | / | / | / | / | / |
| Comparative example 3 | Graphite | Al₂O₃ | 20 | 2 | / | / | / | / |
| Comparative Example 4 | Graphite | 3 (3-nitrophenyl) acrylonitrile/ole fin sulfonic acid copolymer | 20 | 2 | / | / | / | / |

### 3) Performance characterization of the lithium-ion battery

3.1) Test of a capacity retention ratio: a LAND testing system was used to perform a charge and discharge test on the battery.

In a condition of 45°C, a charging and discharging voltage range of the battery was kept as 2.5-3.65 V, cycling was performed at 1C current density, and a retention rate of a battery capacity after 1000 cycles was recorded. A test result is shown in Table 2 for details.

3.2) Measurement of a first cycle coulombic efficiency: a LAND test system was used to perform a charge and discharge test of the battery.

In a condition of 45°C, a charging and discharging voltage range of the battery was kept as 2.5-3.65 V, cycling was performed at 1C current density, and a retention rate of a battery capacity at the third cycle was recorded. A test result is shown in Table 2 for details. (It should be noted herein that the first cycle of the battery is the formation stage, and the third cycle is more stable than the second cycle, so the third cycle is selected as the first cycle in the practical sense of the present application)

**Table 2 Performance parameters in Examples 1-17 and Comparative Examples 1-4**

| Group | First cycle coulombic efficiency | Capacity retention rate |
|---|---|---|
| Example 1 | 91.3% | 92.3% |
| Example 2 | 84.0% | 88.2% |
| Example 3 | 83.5% | 87.5% |
| Example 4 | 89.8% | 91.5% |
| Example 5 | 88.1% | 91.0% |
| Example 6 | 82.4% | 88.0% |
| Example 7 | 82.1% | 85.3% |
| Example 8 | 90.1% | 90.8% |
| Example 9 | 84.0% | 87.9% |
| Example 10 | 89.7% | 91.3% |
| Example 11 | 85.6% | 86.7% |
| Example 12 | 88.7% | 88.5% |
| Example 13 | 90% | 90.3% |
| Example 14 | 83% | 84.2% |
| Example 15 | 86.1% | 86.1% |
| Example 16 | 91.3% | 92.3% |
| Example 17 | 78% | 77% |
| Comparative Example 1 | 80% | 81% |
| Comparative Example 2 | 74% | 70% |
| Comparative example 3 | 82% | 83.20% |
| Comparative Example 4 | 83.0% | 82.60% |

In the embodiment of the present application, the capacity retention rate is used to characterize the cycle performance of the battery, and when the capacity retention rate is higher, it represents that the capacity retention of the battery after being cycled to a specific number of cycles is higher, that is, the cycle performance of the battery is better.

According to Examples 1-17 and Comparative Examples 1-4, it may be known that coating at least one of polymethyl methacrylate, sodium maleate, and oleic acid diethanolamide borate on the surface of the negative electrode active material may improve the first cycle coulombic efficiency and the cycle performance of the battery.

According to Examples 1-10, it may be known that the first cycle coulombic efficiency and the cycle performance of the battery may be improved by setting the thickness of the coating layer to be 5nm-50nm, and further, setting the thickness of the coating layer to be 10nm-20nm is beneficial to further improving the cycle performance and the first cycle coulombic efficiency of the battery.

According to Examples 1-10, it may be known that when the coating layer is polymethyl methacrylate, the molecular weight of the coating layer is 500,000 to 2,000,000, particularly 1,000,000 to 1,500,000, which is beneficial to further improving the cycle performance and the first cycle coulombic efficiency of the battery.

According to Examples 1-5, it may be known that when the coating substance is methyl methacrylate and the formed coating layer is polymethyl methacrylate, the mass ratio of the methyl methacrylate to the negative electrode active substance is 1 to 5, particularly 1.5 to 3, so that the coating layer may have a more suitable thickness, which is beneficial to further improving the cycle performance and the first cycle coulombic efficiency of the battery.

According to Examples 6-10, it may be known that when the coating substance is methyl methacrylate and the formed coating layer is polymethyl methacrylate, the treatment time is 1h-8h, particularly 3h-5h, which is beneficial to further improving the cycle performance and the first cycle coulombic efficiency of the battery.

According to Examples 1 and 10, it may be known that when the coating substance is methyl methacrylate and the formed coating layer is polymethyl methacrylate, the treatment temperature is not lower than 60°C, which may further improve the cycle performance and the first cycle coulombic efficiency of the battery.

According to Examples 1, 11-14, and 15, it may be known that the performance of the battery may be improved by coating polymethyl methacrylate, sodium maleate, or oleic acid diethanolamide borate on the surface of the negative electrode active material.

According to Examples 11-14, it may be known that when the coating layer is sodium maleate, the mass ratio of sodium maleate to the negative electrode active material is 1 to 3, particularly 1.5 to 2, which may improve the cycle performance and the first cycle coulombic efficiency of the battery.

According to Examples 1 and 16, it may be known that a plurality of catalysts are applicable to the technical solutions of the present application.

According to Examples 1 and 17, it may be known that a plurality of negative electrode active substances are applicable to the technical solutions of the present application.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A negative electrode active material, comprising:
a negative electrode active substance and a coating layer, wherein the coating layer is coated on a surface of the negative electrode active substance, and the coating layer comprises at least one of polymethyl methacrylate, sodium maleate, and oleic diethanolamide borate.

2. The negative electrode active material according to claim 1, wherein
a thickness of the coating layer is 5 nm to 50 nm, and optionally, the thickness of the coating layer is 10 nm to 20 nm.

3. The negative electrode active material according to claim 1 or 2, wherein
a molecular weight of the polymethyl methacrylate is 500,000 to 2,000,000, and optionally, the molecular weight of the polymethyl methacrylate is 1,000,000 to 1,500,000.

4. The negative electrode active material according to any one of claims 1 to 3, wherein
the negative electrode active substance comprises at least one of graphite and a silicon-based material, and
optionally, the silicon-based material comprises at least one of monatomic silicon, a silicon-oxygen compound, a silicon-carbon compound, and a composite of the monatomic silicon, the silicon-oxygen compound, and the silicon-nitrogen compound;
optionally, the silicon-oxygen compound comprises SiₐO_{b}, wherein a=1, 1≤b≤ 2; and
optionally, the silicon-carbon compound comprises Si_{c}C_{d}, wherein c=1 and d=1.

5. A preparation method for a negative electrode active material, comprising:
providing a negative electrode active substance and a coating substance; and
mixing the negative electrode active substance and the coating substance, and performing a treatment to obtain the negative electrode active substance and a coating layer coated on a surface of the negative electrode active substance,
wherein the coating substance comprises at least one of methyl methacrylate, sodium maleate, and oleic diethanolamide borate.

6. The preparation method according to claim 5, wherein
a thickness of the coating layer is 5 nm to 50 nm, and optionally, the thickness of the coating layer is 10 nm to 20 nm.

7. The preparation method according to claim 5 or 6, wherein mixing the negative electrode active substance and the coating substance, and performing a treatment comprises:
polymerizing the methyl methacrylate to form the coating layer, the coating layer comprising polymethyl methacrylate,
wherein a molecular weight of the polymethyl methacrylate is 500,000 to 2,000,000, and optionally, the molecular weight of the polymethyl methacrylate is 1,000,000 to 1,500,000.

8. The preparation method according to claim 7, wherein
a mass ratio of the methyl methacrylate to the negative electrode active substance is 1 to 5, and optionally, the mass ratio of the methyl methacrylate to the negative electrode active substance is 1.5 to 3.

9. The preparation method according to claim 7 or 8, wherein
a treatment temperature of the negative electrode active substance and the methyl methacrylate is not lower than 60°C, and optionally, the treatment temperature is 60°C to 220°C.

10. The preparation method according to any one of claims 7 to 9, wherein
a treatment time of the negative electrode active substance and the methyl methacrylate is 1h to 8h, and optionally, the treatment time is 3h to 5h.

11. The preparation method according to any one of claims 5 to 10, wherein the mixing the negative electrode active substance and the coating substance, and performing a treatment comprises:
mixing the catalyst, the negative electrode active substance, and the methyl methacrylate, wherein
optionally, the catalyst comprises at least one of an organic peroxide and an azo compound.

12. The preparation method according to claim 5, wherein in the step of mixing the negative electrode active substance and the coating substance, and performing a treatment,
the coating substance comprises at least one of sodium maleate and oleic diethanolamide borate; and
the treatment temperature of the negative electrode active substance and at least one of the sodium maleate and the oleic acid diethanolamide borate is not lower than 40°C, and optionally, the treatment temperature is 40°C to 120°C.

13. The preparation method according to claim 12, wherein
a mass ratio of at least one of the sodium maleate and the oleic acid diethanolamide borate to the negative electrode active substance is 1 to 3, and optionally, the mass ratio of at least one of the sodium maleate and the oleic acid diethanolamide borate to the negative electrode active substance is 1 to 2.

14. The preparation method according to any one of claims 5 to 13, wherein
the negative electrode active substance comprises at least one of graphite and a silicon-based material, and
optionally, the silicon-based material comprises at least one of monatomic silicon, a silicon-oxygen compound, a silicon-carbon compound, and silicon-nitrogen compound, and a composite of the monatomic silicon, the silicon-oxygen compound, and the silicon-nitrogen compound;
optionally, the silicon-oxygen compound comprises SiₐO_{b}, wherein a=1, 1≤b≤ 2; and
optionally, the silicon-carbon compound comprises Si_{c}C_{d}, wherein c=1 and d=1.

15. A negative electrode plate, comprising the negative electrode active material according to any one of claims 1 to 4, and/or the negative electrode active material prepared by the preparation method for a negative electrode active material according to any one of claims 5 to 14.

16. A battery cell, comprising the negative electrode plate according to claim 15.

17. A battery, comprising the battery cell according to claim 16.

18. An electrical device, comprising the battery according to claim 17.
